# EUROPÄISCHE PATENTSCHRIFT

(11) **EP 3 189 436 B1**
(45) Veröffentlichungstag und Bekanntmachung des Hinweises auf die Patenterteilung: **18.07.2018**
(21) Anmeldenummer: 15813686.1
(22) Anmeldetag: 03.09.2015
(51) Int. Cl.: G06F 11/07, G06F 11/16

(54) **COMPUTERSYSTEM UND VERFAHREN FÜR SICHERHEITSKRITISCHE ANWENDUNGEN**
COMPUTER SYSTEM AND METHOD FOR SECURITY SENSIBLE APPLICATIONS
SYSTEM ORDINATEUR ET METHODE POUR APPLICATION A SECURITE CRITIQUE

(30) Priorität: 05.09.2014 AT 506132014
(43) Veröffentlichungstag der Anmeldung: 12.07.2017
(73) Patentinhaber: FTS Computertechnik GmbH, 1040 Wien (AT)
(72) Erfinder: KOPETZ, Hermann, A-2500 Baden (AT)
(74) Vertreter: Patentanwaltskanzlei Matschnig & Forsthuber OG
(86) Internationale Anmeldenummer: PCT/AT2015/050212
(87) Internationale Veröffentlichungsnummer: WO 2016/033629

(56) Entgegenhaltungen:
- WO-A1-2013/100604
- WO-A1-2013/123543
- WO-A1-2013/138833
- DE-A1-102013 202 482

## Beschreibung

Die Erfindung betrifft ein Computersystem zum Durchführen von sicherheitskritischen Anwendungen, wobei das Computersystem eine Vielzahl von Knotenrechnern und ein Kommunikationssystem umfasst.

Weiters betrifft die Erfindung ein Verfahren zum Durchführen von sicherheitskritischen Anwendungen in einem Computersystem, welches Computersystem eine Vielzahl von Knotenrechner und ein Kommunikationssystem umfasst.

Mit dem Vordringen der Computertechnik in sicherheitskritische Anlagen, z.B. im Bereich des autonomen Fahrens von Kraftfahrzeugen, müssen systemtechnische Vorkehrungen getroffen werden, die nach dem Auftreten eines gefährlichen Computerfehlers die Anlage automatisch in einen sicheren Zustand zu führen. Bei einem autonomen Kraftfahrzeug ist ein sicherer Zustand z.B. der angehaltene Zustand des Fahrzeuges.

Entsprechend dem Stand der Technik wird die Steuerung einer sicherheitskritischen Anlage durch ein verteiltes Computersystem vorgenommen. Ein verteiltes Computersystem besteht aus einer Vielzahl von Knotenrechnern und einem Kommunikationssystem, über das die Knotenrechner Nachrichten austauschen.

Ein Knotenrechner ist eine *Fault-Containment Unit (FCU),* wenn die unmittelbaren Folgen einer Fehlerursache ausschließlich auf den Knotenrechner beschränkt bleiben [2, p.137]. Die mittelbaren Folgen eines Fehlers einer FCU sind *der Ausfall einer erwarteten Nachricht* oder eine *fehlerhafte Nachricht.* Eine FCU, die im Fehlerfall keine Nachricht sendet, bezeichnet man als *selbstprüfende FCU* (*self-checking FCU,* abgekürzt SCFCU oder *fail-silent FCU*).

Ein Fehler einer FCU kann entweder durch einen physikalischen Fehler der Hardware (*Hardwarefehler*) oder durch einen Fehler im Entwurf (*Softwarefehler*) verursacht werden.

Eine Möglichkeit, eine SCFCU zu realisieren, die nach dem Auftreten eines Hardwarefehlers keine Nachricht sendet, besteht in der parallelen Berechnung des Resultats durch zwei redundante identische Baueinheiten und dem anschließenden Vergleich der Resultate. Wenn sich die Resultate der beiden parallel angeordneten Baueinheiten unterscheiden, so wird kein Resultat (keine Nachricht) an die Umgebung ausgegeben. Der technische Aufwand zur Realisierung einer solchen SCFCU ist mehr als doppelt so groß wie der Aufwand zur Realisierung einer *nicht selbstprüfenden* FCU (non-self-checking FCU, abgekürzt NSCFCU).

Eine Möglichkeit, eine SCFCU zu realisieren, die Softwarefehler erkennt, besteht in der parallelen Anordnung von zwei FCUs mit unterschiedlicher Software, der die gleiche Aufgabenstellung zu Grunde liegt, und dem Vergleich der Resultate *(Softwarediversität).* Wenn sich die Resultate der beiden parallel angeordneten FCUs unterscheiden, so wird kein Resultat (keine Nachricht) an die Umgebung ausgegeben. Der technische Aufwand zur Realisierung einer solchen SCFCU ist mehr als doppelt so groß wie der Aufwand zur Realisierung einer NSCFCU.

Wenn die Software, die in einer FCU eingesetzt wird, so einfach ist, dass sie formal überprüft und umfassend getestet werden kann, so ist die Annahme gerechtfertigt, dass Entwurfsfehler im Betrieb nicht auftreten. In diesem Fall ist es ausreichend, wenn die SCFCU Hardwarefehler erkennt.

In vielen technischen Anwendungen kann zwischen einem *einfachen Resultat* und einem *optimierten Resultat* unterschieden werden.

Ein *einfaches Resultat* liegt vor, wenn mit einem Algorithmus, der umfassend getestet und vorzugsweise formal überprüft werden kann, ein Resultat errechnet wird, dass alle sicherheitskritischen Vorgaben erfüllt und eine brauchbare Lösung der gestellten Aufgabe darstellt.

Unter der *Umhüllung* (engl. envelope: *the technical limits within which an electronic system may be safely operated* [3]) eines einfachen Resultats wird die Menge aller Resultate verstanden, die alle sicherheitskritischen Vorgaben erfüllen und eine Lösung der gestellten Aufgabe gewährleisten.

Ein *optimiertes Resultat* liegt vor, wenn ein Resultat errechnet wird, das unter den gegebenen Randbedingungen die *bestmögliche* Lösung der gestellten Aufgabe darstellt. In den meisten Fällen erfordert die Berechnung eines *optimierten* Resultats einen wesentlich höheren algorithmischen und rechentechnischen Aufwand als die Berechnung eines *einfachen* Resultats. Die Komplexität eines Optimierungsalgorithmus macht es in vielen Fällen unmöglich, den Algorithmus formal zu analysieren oder umfassend zu testen.

Dokument WO2013/138833 A1 offenbart ein Verfahren zur Eingrenzung der Auswirkungen von Softwarefehlern in einem verteilten Echtzeitsystem, in dem mehrere verteilte Anwendungssysteme gleichzeitig exekutiert werden, wobei jedes Anwendungssystem eine abgekapselte Software-Fault-Containment-Unit (SWFCU) bildet.

Es ist eine Aufgabe der Erfindung, eine Lösung dafür anzugeben, wie das Auftreten eines gefährlichen Fehlers in einer sicherheitskritischen Computeranwendung erkannt werden kann und die Folgen des Fehlers abgeschwächt werden können.

Außerdem ist es eine Aufgabe der Erfindung, auf unkomplizierte Weise die Überprüfung eines optimierten Resultats dahingehend, ob es den in dem jeweiligen Anwendungsfall gegebenen Sicherheitsanforderungen entspricht, zu ermöglichen.

Diese Aufgabe wird mit einem eingangs genannten Computersystem dadurch gelöst, dass erfindungsgemäß Sensordaten parallel an einen oder mehrere Knotenrechner geführt werden, wobei die Knotenrechner, vorzugsweise unter Einsatz eines Optimierungsalgorithmus, ein *optimiertes Resultat* zur Lösung einer gegebenen Aufgabenstellung, etwa im Rahmen der sicherheitskritischen Anwendung, errechnen und dieses optimierte Resultat, vorzugsweise zur Überprüfung der Sicherheit, an einen Knotenrechner, welcher als SCFCU ausgebildet ist, übergeben, und wobei die SCFCU direkt mit einer Aktuator-Steuerung verbunden ist, und wobei weiters die SCFCU aus den Sensordaten ein *einfaches Resultat* und eine *Umhüllung* des einfachen Resultats errechnet und die SCFCU überprüft, ob die, insbesondere für die Sicherheit relevanten, Ergebniswerte des optimierten Resultats innerhalb der Umhüllung des *einfachen Resultats* liegen, und, falls dies der Fall ist, das optimierte Resultat direkt an die Aktuator-Steuerung weiterleitet, und falls dies nicht der Fall ist, das von der SCFCU errechnete einfache Resultat direkt an die Aktuator-Steuerung weiterleitet.

Ein Resultat kann dabei eine Vielzahl von zusammengehörigen Ergebniswerten enthalten, z.B. ist ein Punkt im Raum, der von eine Roboterarm zu einem Zeitpunkt angesteuert werden soll, *ein Resultat,* das aus den Ergebniswerten für die drei Koordinaten und dem Zeitpunkt besteht. Weiters wird diese Aufgabe mit einem eingangs genannten Verfahren dadurch gelöst, dass erfindungsgemäß Sensordaten parallel von einem oder mehreren Knotenrechner verarbeitet werden, wobei die Knotenrechner, vorzugsweise mit einem Optimierungsalgorithmus, ein *optimiertes Resultat* zur Lösung der gegebenen Aufgabenstellung, etwa im Rahmen der sicherheitskritischen Anwendung, errechnen, wobei dieses *optimierte* Resultat, vorzugsweise zur Überprüfung der Sicherheit, an einen Knotenrechner, welcher als SCFCU ausgebildet ist, übergeben wird, wobei die SCFCU direkt mit der Aktuator-Steuerung verbunden ist und, vorzugsweise mit einem der formalen Analyse zugänglichen Algorithmus, aus den Sensordaten ein *einfaches Resultat, das vorzugsweise alle Sicherheitsanforderungen erfüllt,* und eine *Umhüllung* des einfachen Resultats errechnet, und wobei die SCFCU überprüft, ob das *optimierte Resultat* innerhalb der Umhüllung des *einfachen Resultats* liegt und, falls dies der Fall ist, das optimierte Resultat direkt an die Aktuator-Steuerung weiterleitet, und falls dies nicht der Fall ist, das von der SCFCU errechnete einfache Resultat direkt an die Aktuator-Steuerung weiterleitet wird.

Erfindungsgemäß wird vorgeschlagen, in einer sicherheitsrelevanten Aufgabenstellung die Berechnung der Sollwerte für die Aktuatoren-Steuerung von mindestens zwei parallel arbeitenden Knotenrechnern, vorzugsweise periodisch, durchzuführen, wobei jener Knotenrechner, der die Sollwerte direkt an die Aktuatoren-Steuerung ausgibt, als SCFCU ausgebildet sein muss. Der eine oder die mehreren anderen Knotenrechner sind nicht self-checking Knotenrechner, die entsprechend leistungsfähig (d.h. jedenfalls leistungsfähiger als die SCFCU) ausgeführt werden können, und diese berechnen mit Optimierungsalgorithmen ein *optimiertes Resultat,* das der SCFCU zur Überprüfung übergeben wird. Die SCFCU errechnet mit einem leicht analysierbaren Algorithmus ein *einfaches Resultat* und eine *Umhüllung* des einfachen Resultats. Die SCFCU überprüft, ob das *optimierte* Resultat in der Umhüllung des einfachen Resultats liegt. Ist dies der Fall, so wird das *optimierte* Resultat, das von den leistungsfähigen Knotenrechnern errechnet wurde, an die Aktuatoren-Steuerung weitergeleitet. Ist dies nicht der Fall, so wird das einfache Resultat, das von der SCFCU errechnet wurde, an die Aktuatoren-Steuerung weitergeleitet.

Die Aktuatoren-Steuerung überwacht das Eintreffen der periodischen Nachricht von der SCFCU zur Aktuatoren-Steuerung mittels eines Timeouts. Wenn mittels des Timeouts erkannt wird, dass die Aktuatoren-Steuerung keine Nachricht von der SCFCU empfangen hat, so sucht die Aktuatoren-Steuerung autonom einen sicheren Zustand auf. Der sichere Zustand hängt dabei von der jeweiligen konkreten sicherheitskritischen Anwendung ab.

Vorteilhafte Ausgestaltungen der Erfindung, welche für sich oder in beliebiger Kombination realisiert sein können, sind im Folgenden beschrieben:
Von Vorteil ist es, wenn das Kommunikationssystem ein zeitgesteuertes Kommunikationssystem ist.

Von Vorteil ist es, wenn die Kommunikation zwischen den Knotenrechnern auf dem TTEthernet Protokoll basiert.

Von Vorteil ist es, wenn die SCFCU aus zwei Baueinheiten und einem Vergleicher besteht, und wo die zwei Baueinheiten aus den Eingabedaten bzw. Sensordaten parallel zwei Resultate errechnen und anschließend der Vergleicher überprüft, ob die beiden Resultate identisch sind, und falls dies nicht der Fall ist, die SCFCU keine Ausgabedaten produziert.

Weiters ist es von Vorteil, wenn die SCFCU periodisch eine Nachricht an die Aktuator-Steuerung sendet.

Es kann von Vorteil sein, wenn die SCFCU periodisch zu a priori festgelegten Zeitpunkten eine Nachricht an die Aktuator-Steuerung sendet.

Zweckmäßig kann es sein, wenn die Aktuator-Steuerung die Aktuatoren autonom in einen sicheren Zustand versetzt, wenn die periodische Nachricht von der SCFCU an die Aktuator-Steuerung ausbleibt.

Von Vorteil ist es, wenn die SCFCU eine Nachricht an einen Knotenrechner, welcher als Monitorknoten ausgebildet ist, sendet, wenn das optimierte Resultat außerhalb der Umhüllung des einfachen Resultats liegt.

In der folgenden Beschreibung wird eine konkrete Realisierung dieser Vorrichtung und dieses Verfahrens vorgestellt.

Im Folgenden wird die Erfindung an Hand der Zeichnung näher erörtert. In dieser zeigt die einzige

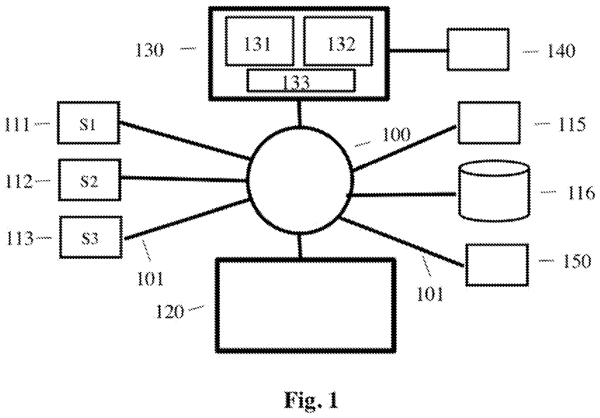

Fig. 1 beispielhaft die Struktur eines Computersystems zur Realisierung einer sicherheitskritischen Aufgabenstellung in einem autonomen Fahrzeug.

Das folgende konkrete Beispiel befasst sich mit der Berechnung der optimalen gefahrlosen Geschwindigkeit eines autonomen Fahrzeuges entlang einer gegeben Route, die in einer Navigationsdatenbank vorgeben ist. In diesem Beispiel wird dem Wunsch des Fahrers entsprechend ein minimaler Energieverbrauch entlang der Route als Optimierungsziel vorgegeben. Bei einem Elektrofahrzeug ist der minimale Energieverbrauch von besonderer Bedeutung, da er die Reichweite des Fahrzeuges mit einer Batterieladung bestimmt.

Der minimale Energieverbrauch errechnet sich mittels eines umfassenden Optimierungsmodells, das für jeden Streckenabschnitt eine *optimale Geschwindigkeit* vorgibt, wobei der Energieverbrauch des Motors, die Freilaufeigenschaften des Fahrzeugs, der Verlauf und die Neigung der Straße, die gegenwärtigen und zukünftigen Kurvenradien der Straße, die gegebene Oberflächenbeschaffenheit der Straße (z.B. trocken, nass, schneebedeckt), die gesetzlich vorgegebene Maximalgeschwindigkeit und das konkrete Verkehrsaufkommen berücksichtigt werden. Aufgrund der Komplexität eines solchen Modells kann eine formale Verifikation des Modells mit den heute zur Verfügung stehenden Methoden nicht durchgeführt werden.

Fig. 1 zeigt die Struktur eines für sicherheitskritische Aufgaben ausgelegten verteilten Computersystems mit angeschlossenen Sensoren und Aktuatoren. Ein Sensor S1 **111**, in diesem Beispiel ein GPS Sensor, erfasst die Position des Fahrzeugs. Ein Sensor S2 **112,** in diesem Beispiel eine Kamera, beobachtet die Verkehrszeichen. Ein Abstandsensor S3 **113,** z.B. ein Radar-Sensor, misst den Abstand zum nächsten Fahrzeug oder zu einem Hindernis auf der Fahrbahn. Ein Knotenrechner **115** erfasst den Fahrerwunsch. Ein Knotenrechner **140,** in diesem Beispiel eine Aktuatoren-Steuerung, übernimmt einen vorgegebenen Sollwert von einer SCFCU **130.** Eine Navigationsdatenbank **116** enthält die Navigationsdaten, die den Verlauf der Route beschreiben. Ein Knotenrechner **150** ist eine Monitorkomponente, die den Betrieb des Systems beobachtet und Fehlermeldungen speichert.

Die Sensoren **111, 112** und **113,** die Eingabeeinheit **115** für den Fahrerwunsch, die Navigationsdatenbank **116,** ein weiterer, vorzugsweise leistungsfähiger Knotenrechner **120** und die SCFCU **130** tauschen über eine zentrale Nachrichtenverteilereinheit **100** Nachrichten aus. Es ist vorteilhaft, wenn die Nachrichtenverteilung über ein zeitgesteuertes Kommunikationsprotokoll, z.B. das TTEthernet Protokoll [4] realisiert wird. Ein zeitgesteuertes Protokoll erkennt das Auftreten von Fehlern im Zeitbereich.

Bei den Sensoren **111, 112, 113,** dem Knotenrechner **120,** der SCFCU **130,** den Knotenrechner **140,150,** sowie dem Knotenrechner **115** handelt es sich um Knotenrechner.

Im unteren Teil der Fig. 1 ist der, vorzugsweise leistungsfähige, Knotenrechner **120** angeordnet, der unter Verwendung eines umfassenden Optimierungsmodells die optimale Geschwindigkeit (= optimiertes Resultat) für jeden Streckenabschnitt berechnet. Die Berechnung erfolgt vorzugsweise periodisch, wobei im konkreten Beispiel die Dauer einer Periode *100 msec* beträgt. Bei einer Geschwindigkeit von *30 m*/*sec,* d.s. *108 km*/*h,* wird in einer Periode ein Streckenabschnitt von *3 m* zurückgelegt. Der Knotenrechner **120** berechnet aus den Eingabedaten der Sensoren und der Position auf der geplanten Route eine *optimale* Geschwindigkeit z.B. für die nächsten hundert Streckenabschnitte und sendet diese Geschwindigkeiten an die SCFCU **130** zur Überprüfung.

Da im komplexen Optimierungsmodell des Knotenrechners **120** latente Entwurfsfehler vorhanden sein können, und/oder, da der Knotenrechner **120** über keine selbst-überprüfende Hardware verfügt, in dieser nicht selbst-überprüfenden Computerhardware unerkannte Hardwarefehler, vorwiegend transiente Hardwarefehler, auftreten können, kann ein vom Knotenrechner **120** errechnetes Resultat fehlerhaft sein.

In der gezeigten schematischen Darstellung oberen Teil der Fig. 1 verfügt daher das Computersystem über eine selbstüberprüfende FCU, die sogenannte und oben schon erwähnte SCFCU **130.** Die SCFCU **130** beinhaltet zwei Baueinheiten **131** und **132,** die parallel aus den Eingabedaten der Sensoren und der Position auf der geplanten Route mittels eines vorzugsweise der formalen Analyse zugänglichen Algorithmus ein *einfaches Resultat* (d.i. im konkreten Beispiel eine gefahrlose Geschwindigkeit) und eine *Umhüllung* dieses einfachen Resultats auf dem gegenwärtigen Streckenabschnitt errechnet. Die Grenzen der Umhüllung ergeben sich in dem gewählten Beispiel aus der gesetzlich vorgegebenen Maximalgeschwindigkeit, erfasst vom Sensor **112,** dem aktuellen Kurvenradius des aus der Navigationsdatenbank entnommenen Streckenabschnitts, dem konkreten Zustand der Fahrbahn und dem Abstand zum voranfahrenden Fahrzeug, gemessen durch den Abstandsensor **113.**

Im Modell der SCFCU **130** wird das einfache Resultat (d.i. die gefahrlose Geschwindigkeit) nur für den gegenwärtigen Streckenabschnitt berechnet (nicht für die hundert zukünftigen Streckenabschnitte, wie im komplexen Optimierungsmodell **120**). Die Optimierung des Energieverbrauchs entlang der Route zum Ziel wird in einem Algorithmus, der auf der SCFCU **130** abgearbeitet wird, nicht berücksichtigt, um das Modell einfach zu halten. Als *gefahrlose Geschwindigkeit* wird z.B. ein Wert von 80 % der unter den gegebenen Umständen errechneten Maximalgeschwindigkeit angesetzt. Die Umhüllung der gefahrlosen Geschwindigkeit umfasst alle Geschwindigkeiten, die kleiner sind als die errechnete maximale gefahrlose Geschwindigkeit.

Wenn der vom Knotenrechner **120** für den gegenwärtigen Streckenabschnitt errechnete Geschwindigkeitswert innerhalb der von der SCFCU **130** errechneten Umhüllung liegt, dann wird dieser Geschwindigkeitswert von der SCFCU **130** an die Aktuatoren-Steuerung **140** (die Motorsteuerung) übergeben. Ist dies nicht der Fall, so wird der von der SCFCU **130** bestimmte einfache (d.i. gefahrlose) Geschwindigkeitswert an die Motorsteuerung **140** übergeben.

Im fehlerfreien Fall liegt die von Knotenrechner **120** errechnete optimale Geschwindigkeit innerhalb der Umhüllung der gefahrlosen Geschwindigkeit-die für einen minimalen Energieverbrauch optimale Geschwindigkeit kann langsamer sein als der von dem Knotenrechner **120** errechnete gefahrlose Geschwindigkeitswert.

Wenn die SCFCU **130** feststellt, dass der vom Knotenrechner **120** errechnete Geschwindigkeitswert außerhalb der von der SCFCU **130** errechneten Umhüllung liegt, so sendet die SCFCU **130** eine Fehlernachricht an die Monitorkomponente **150.**

Wenn die Aktuatoren-Steuerung **140** nach einem festgelegten Timeout, das z.B. von der Periode der Berechnung abgeleitet wird, keine Nachricht von der SCFCU erhält, so versetzt die Aktuator-Steuerung die Anlage autonom in einen sicheren Zustand. Im konkreten Beispiel bringt die Aktuator-Steuerung in diesem Fall das Fahrzeug zum Stehen.

Wenn die Zeitpunkte des Periodenbeginns und des Periodenende von einer globalen Zeit bestimmt werden, so kann die Aktuatoren-Steuerung **140** unmittelbar nach dem Ausbleiben einer Nachricht von der SCFCU **130** die Anlage autonom in einen sicheren Zustand versetzen.

Die SCFCU **130** ist direkt mit der Aktuator-Steuerung **140** verbunden, während der Knotenrechner **120** über die SCFCU **130** mit der Aktuator-Steuerung verbunden ist, wodurch der Knotenrechner **120** seine Werte nicht direkt an die Aktuator-Steuerung sondern nur nach vorheriger Überprüfung durch die SCFCU an die Aktuator-Steuerung übermitteln kann.

Ein weiteres konkretes Beispiel betrifft die Überprüfung der Grenzen des gesicherten Raums, in dem sich ein mobiler Roboter bewegen darf. Wenn der Algorithmus, der die Befehle zur Durchführung einer gegebenen Aufgabenstellung berechnet (z.B. das Beladen eines Fahrzeugs) aufgrund eines Fehlers (in der Hardware oder in der Software) einen Sollwert an die Robotersteuerung vorgibt, der außerhalb des abgegrenzten Raums liegt, so wird die entsprechende SCFCU diesen Sollwert nicht an die Robotersteuerung weiterleiten und den Roboter anhalten.

Die vorliegende Erfindung liegt im Bereich der verteilten sicherheitsrelevanten Computersysteme zur Steuerung von technischen Anlagen. Es wird vorgeschlagen in einer sicherheitskritischen Anwendung ein optimales Resultat von leistungsfähigen sich nicht selbst prüfenden Computern zu errechnen und anschließend von einem anderen sich *selbst prüfenden Computer* zu überprüfen, ob das optimale Resultat den gegebenen Sicherheitsanforderungen entspricht.

### Zitierte Literatur:

[1] US Pat. 7,818,296. Holt, J.M. *Computer Architecture and Method of Operation for Multi-Computer Distributed Processing with Synchronization.*
[2] Kopetz, H.. Real-time Systems-Design Principles for Distributed Embedded Applications. Springer Verlag, 2011.
[3] Kariger, B, Fierro, D. Dictionary.com. URL: http://dictionary.reference.com
[4] SAE Standard AS6802 von TT Ethernet. URL: http://standards.sae.org/as6802

## Patentansprüche

1. Computersystem zum Durchführen von sicherheitskritischen Anwendungen, wobei das Computersystem eine Vielzahl von Knotenrechnern und ein Kommunikationssystem umfasst, **dadurch gekennzeichnet, dass** Sensordaten parallel an einen oder mehrere Knotenrechner geführt werden, wobei die Knotenrechner, vorzugsweise unter Einsatz eines Optimierungsalgorithmus, ein *optimiertes Resultat* zur Lösung einer gegebenen Aufgabenstellung errechnen und dieses optimierte Resultat, vorzugsweise zur Überprüfung der Sicherheit, an einen Knotenrechner, welcher als SCFCU ausgebildet ist, übergeben, und wobei die SCFCU direkt mit einer Aktuator-Steuerung verbunden ist, und wobei weiters die SCFCU aus den Sensordaten ein *einfaches Resultat, das vorzugsweise alle Sicherheitsanforderungen erfüllt,* und eine *Umhüllung* des einfachen Resultats errechnet und die SCFCU überprüft, ob die, insbesondere für die Sicherheit relevanten, Ergebniswerte des optimierten Resultats innerhalb der Umhüllung des *einfachen Resultats* liegen, und, falls dies der Fall ist, das optimierte Resultat direkt an die Aktuator-Steuerung weiterleitet, und falls dies nicht der Fall ist, das von der SCFCU errechnete einfache Resultat direkt an die Aktuator-Steuerung weiterleitet.

2. Computersystem nach Anspruch 1, **dadurch gekennzeichnet, dass** das Kommunikationssystem ein zeitgesteuertes Kommunikationssystem ist.

3. Computersystem nach Anspruch 1 oder 2, **dadurch gekennzeichnet, dass** die Kommunikation zwischen den Knotenrechnern auf dem TTEthernet Protokoll basiert.

4. Computersystem nach einem der Ansprüche 1 bis 3, **dadurch gekennzeichnet, dass** die SCFCU aus zwei Baueinheiten und einem Vergleicher besteht, und wo die zwei Baueinheiten aus den Eingabedaten bzw. Sensordaten parallel zwei Resultate errechnen und anschließend der Vergleicher überprüft, ob die beiden Resultate identisch sind, und falls dies nicht der Fall ist, die SCFCU keine Ausgabedaten produziert.

5. Verfahren zum Durchführen von sicherheitskritischen Anwendungen in einem Computersystem, welches Computersystem eine Vielzahl von Knotenrechner und ein Kommunikationssystem umfasst, **dadurch gekennzeichnet, dass** Sensordaten parallel von einem oder mehreren Knotenrechner verarbeitet werden, wobei die Knotenrechner, vorzugsweise mit einem Optimierungsalgorithmus, ein *optimiertes Resultat* zur Lösung der gegebenen Aufgabenstellung errechnen, wobei dieses *optimierte* Resultat, vorzugsweise zur Überprüfung der Sicherheit, an einen Knotenrechner, welcher als SCFCU ausgebildet ist, übergeben wird, wobei die SCFCU direkt mit der Aktuator-Steuerung verbunden ist und, vorzugsweise mit einem der formalen Analyse zugänglichen Algorithmus, aus den Sensordaten ein *einfaches Resultat, das vorzugsweise alle Sicherheitsanforderungen erfüllt,* und eine *Umhüllung* des einfachen Resultats errechnet, und wobei die SCFCU überprüft, ob das *optimierte Resultat* innerhalb der Umhüllung des *einfachen Resultats* liegt und, falls dies der Fall ist, das optimierte Resultat direkt an die Aktuator-Steuerung weiterleitet, und falls dies nicht der Fall ist, das von der SCFCU errechnete einfache Resultat direkt an die Aktuator-Steuerung weiterleitet wird.

6. Verfahren nach Anspruch 5, **dadurch gekennzeichnet, dass** die SCFCU periodisch eine Nachricht an die Aktuator-Steuerung sendet.

7. Verfahren nach Anspruch 5, **dadurch gekennzeichnet, dass** die SCFCU periodisch zu a priori festgelegten Zeitpunkten eine Nachricht an die Aktuator-Steuerung sendet.

8. Verfahren nach einem der Ansprüche 5 bis 7, **dadurch gekennzeichnet, dass** die Aktuator-Steuerung die Aktuatoren autonom in einen sicheren Zustand versetzt, wenn die periodische Nachricht von der SCFCU an die Aktuator-Steuerung ausbleibt.

9. Verfahren nach einem der Ansprüche 5 bis 8, **dadurch gekennzeichnet, dass** die SCFCU eine Nachricht an einen Knotenrechner, welcher als Monitorknoten ausgebildet ist, sendet, wenn das optimierte Resultat außerhalb der Umhüllung des einfachen Resultats liegt.

## Claims

1. Computer system for operating safety-critical applications, wherein the computer system comprises a plurality of node computers and a communication system, **characterised in that** sensor data are forwarded in parallel to one or more node computers, wherein the node computers, preferably using an optimisation algorithm, calculate an *optimised result* to solve a given task and transmit this optimised result, preferably for checking safety, to a node computer designed as a SCFCU, and wherein the SCFCU is directly connected to an actuator controller and wherein in addition the SCFCU from the sensor data calculates a *simple result, which preferably fulfils all safety requirements* and an *envelope* of the simple result and the SCFCU checks whether, in particular the safety-relevant, result values of the optimised result are within the envelope of the *simple result,* and, if so, forwards the optimised result directly to the actuator controller, and if not, forwards the simple result calculated by the SCFCU directly to the actuator controller.

2. Computer system according to claim 1 **characterised in that** the communication system is a time-triggered communication system.

3. Computer system according to claim 1 or 2 **characterised in that** communication between the node computers is based on the TTEthernet protocol.

4. Computer system according to any one of claims 1 to 3 **characterised in that** the SCFCU comprises two modular units and a comparator and wherein the two modular units calculate two results from the input values or sensor data and then the comparator checks whether both results are identical, and if not the SCFCU produces no output data.

5. Method of operating safety-critical applications in a computer system, said computer system comprising a plurality of node computer and a communication system, **characterised in that** sensor data are processed in parallel by one or more node computers, wherein the node computers, preferably using an optimisation algorithm, calculate an *optimised result* to solve the given task, wherein this *optimised* result, preferably for checking the safety, is transmitted to a node compute, which is designed as an SCFCU, wherein the SCFCU is directly connected to the actuator controller, and, preferably with an algorithm accessible to the formal analysis, calculates from the sensor data a *simple result which preferably fulfils all safety requirements* and an *envelope* of the simple result, and wherein the SCFCU checks whether the *optimised result* is within the envelope *of the simple result,* and if so, forwards the optimised result directly to the actuator controller, and if not, the simple result calculated by the SCFCU is forwarded directly to the actuator controller.

6. Method according to claim 5 **characterised in that** the SCFCU periodically sends a message to the actuator controller.

7. Method according to claim 5 **characterised in that** the SCFCU periodically at previously determined points in time sends a message to the actuator controller.

8. Method according to any one of claims 5 to 7 **characterised in that** the actuator controller autonomously switches the actuators into a safety state if the periodic message from the SCFCU to the actuator controller fails to arrive.

9. Method according to any one of claims 5 to 8 **characterised in that** the SCFCU sends a message to a node computer which is designed as a monitor node if the optimised result lies outside the envelope of the simple result.

## Revendications

1. Système informatique, destiné à réaliser des applications critiques en matière de sécurité, le système informatique comprenant une pluralité de nodaux informatiques et un système de communication, **caractérisé en ce que** des données de capteurs sont conduites en parallèle à un ou à plusieurs nodaux informatiques, de préférence en utilisant un algorithme d'optimisation, les nodaux informatiques calculant *un résultat optimisé* pour résoudre un problème donné et transmettant ledit résultat optimisé, de préférence pour la vérification de la sécurité à un nodal informatique, lequel est conçu en tant que SCFCU et la SCFCU étant directement reliée à une commande d'actionneur et la SCFCU calculant par ailleurs à partir des données de capteurs *un résultat simple, qui satisfait de préférence à toutes les exigences en matière de sécurité* et calculant *une enveloppe* du résultat simple et la SCFCU vérifiant si les valeurs résultantes du résultat optimisé, déterminantes notamment en matière de sécurité se situent à l'intérieur de l'enveloppe *du résultat simple* et si c'est le cas, retransmettant le résultat optimisé directement à la commande d'actionneur et si ce n'est pas le cas, retransmettant directement à la commande d'actionneur le résultat simple calculé par la SCFCU.

2. Système informatique selon la revendication 1, **caractérisé en ce que** le système de communication est un est un système de communication à commande temporelle.

3. Système informatique selon la revendication 1 ou 2, **caractérisé en ce que** la communication entre les nodaux informatiques est basée sur le protocole TTEthernet.

4. Système informatique selon l'une quelconque des revendications 1 à 3, **caractérisé en ce que** la SCFCU est constituée de deux unités structurelles et d'un comparateur et les deux unités structurelles calculant à partir des données saisies ou des données de capteurs deux résultats en parallèle et le comparateur vérifiant par la suite si les deux résultats sont identiques et si ce n'est pas le cas, la SCFCU ne produisant pas de données d'édition.

5. Procédé destiné à réaliser des applications critiques en matière de sécurité dans un système informatique, lequel système informatique comprenant une pluralité de nodaux informatiques et un système de communication, **caractérisé en ce que** des données de capteurs sont traitées parallèlement par un ou plusieurs nodaux informatiques, les nodaux informatiques calculant de préférence avec un algorithme d'optimisation *un résultat optimisé* pour résoudre le problème donné, ledit *résultat optimisé* étant transmis de préférence pour la vérification de la sécurité à un nodal informatique, lequel est conçu en tant que SCFCU, la SCFCU étant directement reliée avec la commande d'actionneur, et de préférence avec un algorithme accessible à l'analyse formelle, calculant à partir des données de capteurs *un résultat simple qui satisfait de préférence à toutes les exigences en matière de sécurité* et *une enveloppe* dudit résultat simple et la SCFCU vérifiant si le résultat optimisé se situe à l'intérieur de l'enveloppe *du résultat simple* et si c'est le cas, retransmettant le résultat optimisé directement à la commande d'actionneur et si ce n'est pas le cas, le résultat simple calculé par SCFCU étant directement retransmis à la commande d'actionneur.

6. Procédé selon la revendication 5, **caractérisé en ce que** la SCFCU envoie périodiquement une information à la commande d'actionneur.

7. Procédé selon la revendication 5, **caractérisé en ce que** la SCFCU envoie périodiquement à des moments fixés a priori une information à la commande d'actionneur.

8. Procédé selon l'une quelconque des revendications 5 à 7, **caractérisé en ce que** la commande d'actionneur amène de manière autonome les actionneurs dans un état de sécurité si l'information périodique de la SCFCU à la commande d'actionneur fait défaut.

9. Procédé selon l'une quelconque des revendications 5 à 8, **caractérisé en ce que** la SCFCU envoie une information à un nodal informatique, lequel est conçu en tant que noeud moniteur si le résultat optimisé se situe à l'extérieur de l'enveloppe du résultat simple.
